# EUROPEAN PATENT APPLICATION

(11) **EP 0 733 579 A1**
(43) Date of publication of application: **25.09.1996**
(21) Application number: 96104413.8
(22) Date of filing: 20.03.1996
(51) Int. Cl.: B66C 1/00, B66C 23/00

(54) **Apparatus for handling a load**

(30) Priority: 20.03.1995 IT MI950541
(71) Applicant: Scaglia, Enzo, I-20149 Milano (IT)
(72) Inventor: Scaglia, Enzo, I-20149 Milano (IT)
(74) Representative: Gislon, Gabriele

(57) **Abstract**

Apparatus (1) for the handling of a load comprising a support structure (2), means (3) for gripping or holding the load, at least one load-counterbalancing device (5-10) and means (21) of measuring the weight of the load. There is further provision for means for measuring the force applied to the load in at least one direction of movement and means of controlling the weight counter-balancing device automatically as a function of the weight of the load and the forces applied to it.

## Description

The present invention relates to a device for the handling of loads.

This type of device is generally used to lift and move loads within the limits of a predetermined space e.g. at a mechanical component assembly station on a production line, or at a distribution point for products or for semi-finished products which must be sent to other work-stations for further operations to be carried out on them. Devices known to the prior art comprise substantially a means for gripping or holding the load, at least one load counter-balancing device and a means of measuring the weight of the load.

An example of a prior device is reported in the Italian Patent Application No. IT 26387-A/79 which describes a device for the handling of loads and in particular a means of counter-balancing the load, comprising an electrically driven winch whose operation is controlled by two potentiometers which regulate the torque of the motor in the loaded and unloaded states.

Another example of the prior device is reported in the French Patent Application No. FR 2386473 which describes an apparatus for the handling of loads comprising a device for the measurement of the load in addition to those elements already present in the aforementioned Italian patent application.

In this way, once the electric motor torque values have been set for the loaded and unloaded state, the torque delivered by the electric motor is automatically adapted to the two different conditions.

These devices have been found suitable for light loads. Increasing the load requires more robust structures with greater inertia in the moving parts and more friction in the joints and parts moving across each other.

For this reason, although the weight of the load can be adequately counter-balanced, the handling of the load requires considerable effort because of the increased frictional forces between the various moving surfaces in contact. In practice, this type of apparatus was found to be inadequate for heavy loads, i.e. weights two or three times the maximum weights which could be carried by the prior apparatus described above.

The aim of the present invention is to overcome the above problems of the apparatus of the prior art for moving loads.

Within the scope of this aim, one object is to produce an apparatus which allows loads - however heavy - to be handled without regard to the friction forces between the various moving surfaces in contact during handling of the load.

Another object of the present invention is to improve the control of the apparatus during handling of the load by reducing the effect of the high momentum of the parts in movement.

These object are achieved by the present invention, which relates to an apparatus for the handling of a load, of a type comprising a support structure, means for gripping or holding the load, at least one device for counter-balancing the weight of the load and means of measuring the weight of the load, characterized by having means for measuring the force applied to the load in at least one direction of movement.

In this way the effective force an operative requires to exert to raise or lower a load sustained by the apparatus can be measured, thus taking into account not only the actual weight of the load but also the frictional forces between the various moving surfaces in mutual contact.

The apparatus further comprises means of controlling the weight counter-balancing device automatically as a function of the weight of the load and the forces applied to it.

In this way the power delivered by the counter-balance device is controlled in real-time as a means of assisting the movement imparted by the operative.

In particular, the means of measuring the load weight and the means of measuring the applied force consist of a weight measuring device which can generate an electric signal which represents the load weight and the applied force.

In this way the counter-balance device is able to automatically adjust the power delivered as a function of the effective weight. In other words, if the load has to be raised (or lowered), the operative must exert a force directly upwards (or downwards); the greater the friction forces to be overcome, the more intense will be the effort required to effect the movement. The means of measuring the load weight are able to measure this variation with respect to the load weight alone and so are able to generate a signal that enables the counter-balance device to adjust the power supplied automatically.

A further advantage of the present invention is that the load movement operation does not necessarily require the pre-setting of the load weight or other parameters.

Furthermore, the load can be handled directly by hand without the need of handles for moving the load and controlling the weight counter-balance control, thus facilitating the movement by the operative, who has both hands free.

According to an advantageous aspect of the invention, the means of automatically controlling the power supplied by the said device for counter-balancing the load weight comprise at least one circuit for processing the signal being sent by the weight measuring device.

This is particularly useful to prevent the real-time control of the power being delivered to the weight counter- balance device from setting up undesirable oscillations of the load and, thus, of the entire support structure whenever the operative ceases to provide effort.

In particular, the signal-processing circuit comprises at least one section programmed to filter out oscillations of the signal caused by abrupt variations in the force applied to the load. In practice, a suitable program averages the amplitude of the oscillating signal received from the weight-measuring device and sends a level signal (with amplitude equal to the average of the original weight-measuring device signal) to the weight counter-balancing device.

According to a preferred aspect of the invention, the weight counter-balancing device comprises at least one electric motor connected mechanically to at least one wheel to permit the winding and unwinding of a flexible traction element. The latter may be comprised by a cable, chain, track or similar element.

This embodiment of the weight counter-balance device is particularly versatile with regard to loads of different weight and enables the limiting of momentum and friction due to the moving parts. However, it is possible to realize the weight counter-balance device by other equivalent means, e.g. pneumatic actuators, or provide other means of power transmission, e.g. reduction gearing or worm and screw or other system known in the art.

In one possible embodiment of the apparatus, the flexible traction element is formed by a chain, and the wheel is formed by a toothed wheel. Alternatively, depending on the maximum weight to be carried by the apparatus, the flexible traction element is formed by a multiple chain, and the wheel is formed by a toothed drum.

In this embodiment of the apparatus, one end of the flexible traction element is attached to an arm hinged to the support structure of the apparatus.

There are preferably other arms (attached by joints which allow the load to move in one or more directions or rotate about one or more axis) between the opposite end of the arm hinged to the support structure and the means of gripping or holding the load.

In this embodiment of the weight measuring device is located near one of the joints between the arms, downstream of the weight counter-balancing device.

According to another possible embodiment of the apparatus of the present invention, the apparatus itself could be suspended with a possibility of movement along a guide rail or other similar means.

In this form of embodiment the flexible traction element is wound around one or more pulley blocks connected mechanically to the electric motor, and fixed at one end to at least one of the pulley blocks. The opposite end of the flexible traction element is fixed to a mobile part integral with the means of gripping or holding the load.

Alternatively, the flexible traction element is fixed at one end to a drum with helical groove connected mechanically to the electric motor, while the other end is fixed to a mobile part integral with the means of gripping or holding the load.

In this further embodiment of the apparatus, the weight measuring device is located downstream of the weight counter-balancing device near the said mobile part integral with the means of gripping or holding the load.

The invention will now be described in detail with reference to the attached drawings, which are given by way of illustration and not with limiting purposes, and in which :
- fig. 1 is a schematic view of an embodiment of the apparatus according to the present invention.
- fig. 2 is a schematic side-view of a second embodiment of the apparatus according to the present invention; and
- fig. 3 is a schematic front-view of the embodiment shown in fig. 2.

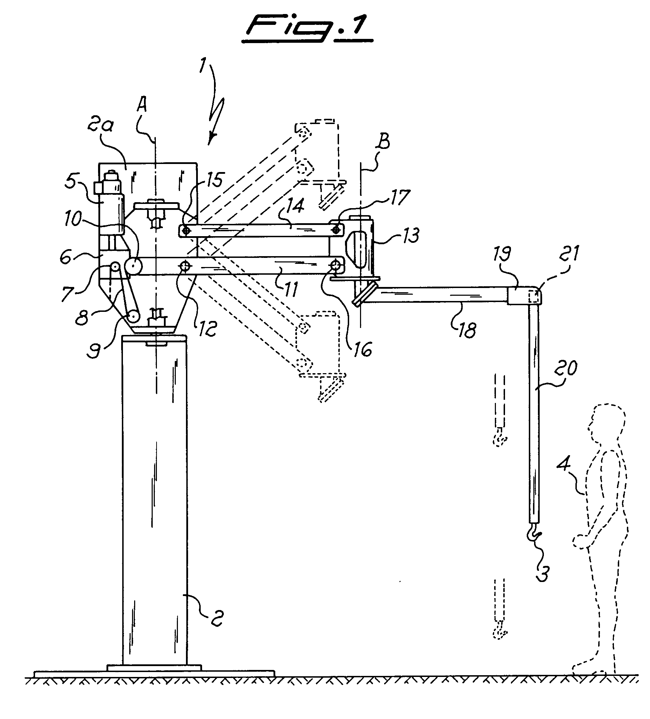

With reference to fig. 1, it is shown an apparatus 1 comprising a fixed support structure 2, a mobile portion 2a of such structure 2, and means 3 of gripping a load by an operative 4. The means 3 are represented for simplicity by a hook, but is understood to include any form which is found suitable to sustain the load, e.g. a frame to maintain a component in a particular position.

In particular, the mobile portion 2a is rotatable with respect to the fixed structure 2 about the axis A shown in fig. 1.

Associated with apparatus 1 there is a device to counter-balance the weight comprising an electric motor 5 fixed to the mobile portion 2a of the support structure 2 and any necessary reduction gearing 6 to mechanically connect the shaft of the electric motor 5 with the wheel 7. A flexible traction element 8 which may be a cable, a wire, a chain, a belt or something similar is wound and unwound onto the wheel 7 (which may be embodied as a winch drum).

The flexible traction element 8, preferably a single-web or multiple-web chain, is fixed by one end to the end 10 of an arm 11 hinged at 12 to the mobile portion 2a of the support structure 2. The chain 8 is fixed by the opposite end to the mobile portion 2a, from which it runs across the driving toothed wheel or drum 7 and the transmission toothed wheel or drum 9. The arm 11 is hinged on its opposite end 16 to a swinging link 13 to which are attached the further load-supporting elements which will be described below.

The arm 11 is twinned by another reinforcing arm 14 to set up a parallel structure in which the arm 14 is hinged to the mobile portion 2a at one of its ends and to the swinging link 13 at the other.

In fig.1 the positions of the arms 11 and 14, the swinging link 13 as well as the means 3 for gripping the load are also represented by dotted lines in the minimum and maximum elevations of the load above the ground level of the support structure 2.

The swinging link 13 is connected to another arm 18 which is always parallel to the ground whatever the position and elevation of the load, and can be rotated with respect to the swinging link 13 about the axis shown by B in fig.1. There is a joint at 18 the opposite end of the arm 18 to which is attached a supporting element 20 comprising at its free end the means 3 of gripping the load.

The supporting element 20 shown in fig.1 is comprised by a bar or rigid beam. However, the supporting element 20 could be comprised by any flexible element of a type already described as long as the weight counter-balancing device is able to assist the elevation movement of the load as soon as the minimum variation is detected in the force applied to it.

In the embodiment shown in fig. 1, the weight measuring device 21 is located in the joint 19 which connects the arm 18 to the supporting element 20. However, the same device 21 could be located in any suitable joint downstream of the weight counter-balancing device. For example, the device 21 could be located on the swinging link 13 or at the end 10 of the arm 11 to which the chain 8 is attached. These further possibilities offer the advantage of being able to locate the device 21 in positions less subject to sudden jolts compared to the position shown in fig. 1.

In operation, suppose there was no load attached to the means 3 of gripping the load, the operative 4 can move the mobile elements of the apparatus 1 with the minimum of effort to bring the means 3 of gripping the load into the most convenient position to secure the load (not shown) to the apparatus 1. The movements in the vertical direction are automatically assisted by the weight counter-balance device.

Once the load has been secured to the means 3 of gripping, the operative 4 can easily move it to the release position with the same minimum of effort since, even in this case, the movement of the load in the vertical direction is automatically assisted by the weight counter-balance device which is able to deliver the necessary power to overcome the friction forces of the mobile elements of the structure.

Indeed, the weight-measurement device 21 generates an electric signal representing the weight of the load and the force applied to it. This signal is sent to a circuit controlling the power supplied to the electric motor 5, the circuit comprising a section for processing the signal according to a preset program.

In particular, when the operative starts or finishes the movement of the load, there is a change in the signal detected by the device 21. The weight counter-balancing device reacts by attempting to compensate this variation. This produces an oscillation of the signal from the device 21 and consequently produces an oscillation in the load that could reach the resonance frequency. To avoid this eventuality the signal is filtered to provide a level signal output with the amplitude equal to the average amplitude of the signal output detected by device 21.

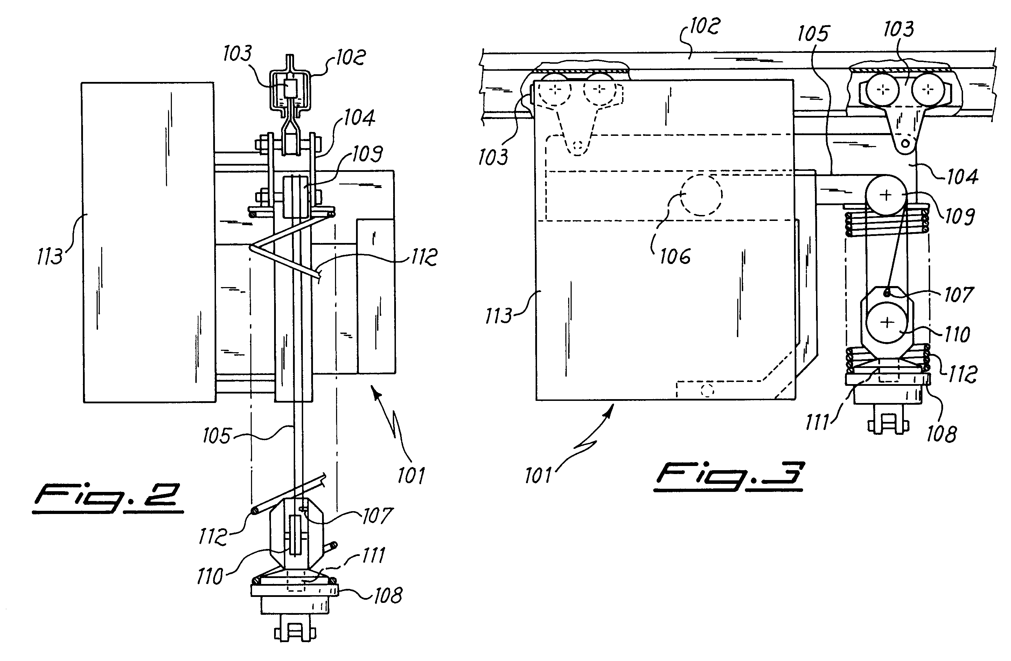

Another possible embodiment of the apparatus according to the present invention is represented by the number 101 in figs. 2 and 3. In this embodiment, the apparatus 101 is suspended from a guide rail 102, e.g. in a box-structure as shown in figs.2 and 3, and is mobile along the rail 102 by means of the carriages 103, the latter being connected by a bracket 104 which maintain the apparatus 101 suspended.

The flexible traction element 105, e.g. a cable or something similar, is wound around a wheel 106 connected mechanically to the electric motor (not shown) and one end is fixed to the wheel 106, while the other end of the flexible traction element 105 is fixed at 107 to a mobile part 108 integral with the means (not shown) of gripping or housing the load. The wheel 106 may comprise one or more pulley-blocks or a drum, depending on the size of the load and the type of flexible element 105 used in the apparatus.

For example, in the embodiment shown in figs. 2 and 3 the wheel 6 is comprised by a single pulley-block, while two return pulley-blocks 109 are provided along the vertical section of the flexible traction element 105 and a further return pulley-block 110 is fitted to the mobile section 108 integral with the means of gripping or holding the load.

In this further embodiment of the apparatus, the weight-measuring device 111 is always downstream of the weight counter-balance device, but near the mobile section 108 integral with the means of gripping or holding the load. A spiral conductor 112 connects the weight-measuring device 111 to the control circuit housed in the fairing 113 to allow regulation of the power delivered to the electric motor.

This solution is particularly suitable where the apparatus 101 is used to move very heavy loads. Increasing the passes of the flexible traction element between the pulley-blocks 109 and 110 increases the friction which opposes the movement which the operative 4 gives to the load in the vertical direction. The same is true if, to support very heavy loads, two or more flexible traction elements are used instead of a single one.

## Claims

1. Apparatus for the handling of a load, of a type comprising a support structure, means for gripping or holding the load, at least one device for counter-balancing the weight of the load and means of measuring the weight of the load, characterized by having means for measuring the force applied to said load in at least one direction of movement.

2. Apparatus according to Claim 1, characterized by comprising means of controlling the said weight counter-balancing device automatically as a function of the weight of the load and the forces applied to it.

3. Apparatus according to Claim 1 or 2, characterized by the said means of measuring the load weight and the said means of measuring the applied force consisting of a weight measuring device which can generate an electric signal which represents the load weight and the applied force.

4. Apparatus according to any of the preceding Claims, characterized by the said means of automatically controlling the power supplied by the said device for counter-balancing the load weight comprising at least one circuit for processing the signal being sent by the said weight-measuring device.

5. Apparatus according to any of the preceding Claims, characterized by the said signal-processing circuit comprising at least one section programmed to filter out oscillations of the said signal caused by abrupt variations in the force applied to the load.

6. Apparatus according to any of the preceding Claims, characterized by the said weight counter-balancing device comprising at least one electric motor connected mechanically to at least one wheel to permit the winding and unwinding of a flexible traction element.

7. Apparatus according to Claim 6, characterized by the said flexible traction element consisting of a chain and the wheel consisting of a toothed wheel.

8. Apparatus according to Claim 6, characterized by the said flexible traction element consisting of by a multiple-web chain and the wheel consisting of by a toothed drum.

9. Apparatus according to Claim 6, characterized by one end of the said flexible traction element being attached to an end of an arm hinged to the said support structure.

10. Apparatus according to any of the Claims 6 to 9, characterized by comprising one or more articulated arms between the said arm hinged to the support structure and the said means of gripping or holding the load.

11. Apparatus according to any of the Claims 6 to 10, characterized by the said device of measuring the weight being located near one of the joints between the said arms, downstream of the weight counter-balancing device.

12. Apparatus according to Claim 6 , characterized by the apparatus itself being suspended with a possibility of movement along a guide rail.

13. Apparatus according to Claims 6 or 12, characterized by the said flexible traction element being wound around one or more pulley blocks connected mechanically to the said electric motor, and fixed at one end to at least one of the said pulley blocks, the opposite end of the said flexible traction element being fixed to a mobile part integral with to the means of gripping or holding the said load.

14. Apparatus according to Claims 6 or 12, characterized by the said flexible traction element being fixed at one end to a drum with helical groove connected mechanically to the electric motor, the other end being fixed to a mobile part integral with the means of gripping or holding the load.

15. Apparatus according to any of the Claims 12 to 14, characterized by the said weight-measuring device being located downstream of the said weight counter-balancing device near the said mobile part integral with the said means of gripping or holding the said load.
